Europäisches Patentamt

European Patent Office

Office européen des brevets

(19)

(11) Veröffentlichungsnummer : **0 472 778 B1**

# (12) EUROPÄISCHE PATENTSCHRIFT

(45) Veröffentlichungstag der Patentschrift :
**09.03.94 Patentblatt 94/10**

(51) Int. Cl.$^5$ : **B23Q 1/18,** B25J 18/02

(21) Anmeldenummer : **90124166.1**

(22) Anmeldetag : **14.12.90**

(54) **Lineareinheit.**

(30) Priorität : **28.08.90 DE 4027122**

(43) Veröffentlichungstag der Anmeldung :
**04.03.92 Patentblatt 92/10**

(45) Bekanntmachung des Hinweises auf die
Patenterteilung :
**09.03.94 Patentblatt 94/10**

(84) Benannte Vertragsstaaten :
**CH DE FR IT LI SE**

(56) Entgegenhaltungen :
**EP-A- 0 102 575
EP-A- 0 180 558**

(56) Entgegenhaltungen :
**EP-A- 0 340 751
WO-A-87/07454
FR-A- 2 530 526
FR-A- 2 600 384**

(73) Patentinhaber : **Montech AG
Gewerbestrasse 12
CH-4552 Derendingen (CH)**

(72) Erfinder : **Trenner, Albrecht
Kronmattstrasse 15
CH-4513 Langendorf (CH)**

(74) Vertreter : **Weiss, Peter, Dr. rer. nat.
Dr. Peter Weiss & Partner Postfach 12 50
D-78229 Engen (DE)**

EP 0 472 778 B1

## Beschreibung

Bei der vorliegenden Erfindung handelt es sich um eine Lineareinheit, insbesondere eine Vorrichtung zum Bearbeiten, Transportieren und Manipulieren von Werkstücken, mit einem Gehäuse und einem aus dem Gehäuse bewegbaren und als Kastenprofil ausgebildeten, mit Führungsstangen versehenen Schlitten, an welchem ein Handlinggerät od. dgl. für das Werkstück festlegbar ist, wobei im Gehäuse sich ggfs. versetzt gegenüberliegend verstellbare Lager angeordnet sind, zwischen denen der Schlitten gleitbar lagert.

Lineareinheiten dieser Art sind beispielsweise aus der FR-A- 2 530 526 bekannt und werden im Gewerbe und in der Industrie eingesetzt, wenn es darum geht, sich stets wiederholende Arbeitsschritte auszuführen. Solche Lineareinheiten können insbesondere geradlinige Bewegungen ausführen. Es sind Einheiten bekannt, welche nur zwei Endlagen aufweisen und solche, welche eine oder mehrere Haltepositionen aufweisen.

Grundsätzlich sind solche Lineareinheiten in ihrer Beschaffenheit und Bauweise annähernd identisch. In einem Gehause ist ein Schlitten angeordnet, welcher an seinem einen Ende, nämlich dort wo er aus dem Gehäuse heraustritt, eine Trägerplatte besitzt. An eine solche Trägerplatte sind entsprechende Werkzeuge, Handlinggeräte, Dreheinheiten od. dgl. anzubringen, welche beispielsweise ein zu bearbeitendes Werkstück greifen und in die gewünschte Arbeitsposition bringen. Für die lineare Versetzung des Werkstückes sorgt bevorzugt eine pneumatische Einrichtung, die den Schlitten aus dem Gehäuse schiebt bzw. wieder in die Ausgangslage zurückbewegt.

Im allgemeinen besteht ein derartiger Schlitten aus einer, bevorzugt jedoch aus zwei Führungsstangen, denen einerseits die Trägerplatte zugeordnet ist und welche in entsprechenden Lagern gleiten. Die Führungsstangen sind häufig verlängerte Kolbenstangen von den Schlitten in Bewegung versetzenden Kolben.

Nachteilig bei solchen Einheiten hat sich jedoch häufig gezeigt, dass bei längeren Hüben der Schlitten, insbesondere beim Bearbeiten von schweren Werkstücken, nicht mehr absolut formstabil ist. Durch entsprechendes Verwinden bzw. Abbiegen der Führungsstangen sind, wenn auch minimal, so doch spürbare, unerwünschte Ungenauigkeiten in Kauf zu nehmen.

Aus der FR-A 2 530 526 ist beispielsweise eine Lineareinheit bekannt, bei der sich Kastenprofile teleskopartig ineinander verschieben. Das eine Kastenprofil stützt sich dabei über Führungsschienen an Rollen ab, welche, nicht näher gezeigt, gelagert sind. Hierbei ist keinerlei Einstellbarkeit des Lagerspieles vorgesehen, was sich als erheblicher Nachteil während der relativ langen Lebensdauer einer solchen Lineareinheit herausstellt.

Eine Einstellbarkeit eines Lagerspiels ist dagegen in der WO-A 8 707 454 gezeigt. Dort bewegt sich innerhalb eines kastenförmigen Gehäuses ein blockartiger Werkzeugträger, wobei zur Längsführung des Werkzeugträgers Rollen- oder Kugellager eingesetzt sind. Einige dieser Lager stützen sich nach außen hin an je einer Druckplatte ab, die mittels einer Schraube zwecks Beseitigung von Lagerspiel einstellbar ist. Im Bereich der Lager ist der Werkzeugträger im übrigen mit Bändern aus einem harten, verschleißfesten Werkstoff besetzt.

Ein weiterer Nachteil solcher Einheiten beruht in der Anordnung der Endanschläge. Da sie meist ausserhalb der Lagerebene des Schlittens liegen, treten beim Anschlagen ebenfalls hohe Verwindungskräfte auf, welche zu Massungenauigkeiten führen oder für einen erhöhten Materialverschleiss sorgen können.

Ein weiterer grosser Nachteil ist bei den Lineareinheiten der oben beschriebenen Art, dass Zwischenpositionen zwischen den Endanschlägen nur in bestimmten Bereichen und nicht über die gesamte Hublänge einrichtbar sind. Eine einfache stufenlose Einstellung von Zwischenanschlägen über die gesamte Hublänge ist jedoch eine immer wieder geforderte Notwendigkeit.

All dies sind Nachteile, welche sich in der Anwendung entweder als zeitraubend, materialverschleissend oder als kostspielig auszeichnen.

Der Erfinder hat sich zur Aufgabe gestellt, eine Lineareinheit der o.g. Art zu schaffen, welche sehr formstabil ist und massgenau arbeitet und durch stufenlos einstellbare Zwischenpositionen eine grosse Vielseitigkeit im Anwendungsbereich zulässt.

Zur Lösung dieser Aufgabe führt, dass die Führungsstangen querschnittlich rund ausgebildetet und die als Kugellager ausgebildeten Lager der Form der Führungsstange teilweise entsprechend nachgebildet sind, wobei zumindest eines der sich gegenüberliegenden Kugellager auf einem Achsbolzen sitzt, der einerseits mit einem Gewindeabschnitt in eine hülsenförmige Spannmutter eingreift und andererseits sich über einen Bolzenabschnitt gegen einen Schraubenbolzen abstützt, wobei Achsbolzen, Gewindeabschnitt, Bolzenabschnitt und Schaubenbolzen mit ihren Achsen senkrecht zur Führungsstange angeordnet sind und die Achse des Achsbolzens achsparallel zur Achse des benachbarten Bolzenabschnittes und des Gewindeabschnittes verläuft.

Die Rollenlagerung besteht dabei aus Kugellagern, welche im Gehäuse angeordnet sind und mit Führungsstangen, die im bzw. am Kastenprofil festliegen, zusammenwirken. Die Kugellager sitzen dabei auf einem Achsbolzen, an den einerseits ein Gewindeabschnitt und andererseits bevorzugt über einen Bolzenabschnitt ein Schlitzkopf angeformt ist. Der Gewindeabschnitt greift in eine Spannmutter ein. Spannmutter und Bolzenabschnitt stützen sich gegen dem Gehäuse angeformte Leisten bzw. Stege ab, welche damit ein Widerlager gegen die Führungsstange bilden.

Der dem Bolzenabschnitt angeformte Schlitzkopf schlägt im übrigen mit einer Schulter an einem Steg an. An dieser Stelle ist der Steg im übrigen über seine gesamte Länge hin exakt plan gefräst, so dass sämtliche aufeinanderfolgenden Schlitzköpfe und damit auch die Achsbolzen und Kugellager eine exakte Position einnehmen.

In den Schlitzkopf dringt im übrigen auch ein weiterer Schraubenbolzen ein, der als Abstützung der gesamten Lagerung dient. Hierbei durchsetzt ein entsprechend geformter Kopf dieses Schraubenbolzens eine Gehäusebohrung, in welcher er satt sitzt und andererseits den Bolzenabschnitt und somit den gesamten Achsbolzen im Gehäuse fixiert bzw. verspannt. Durch das Verwenden eines etwa exzentrischen Achsbolzens ist es denkbar, dass die Kugelbüchsen auch radial leicht lageverändert bzw. eingestellt werden können.

Durch die Verstellbarkeit der Kugellager ist gewährleistet, dass sie die dem Kastenprofil zugeordneten Führungsstangen so ablaufen, dass die Seitenwände des Kastenprofils absolut parallel zur Innenwand des Gehäuses stehen, d.h. das Kastenprofil bzw. der Schlitten ist im Gehäuse einrichtbar. Die Kugellager bzw. die die Kugellager tragenden Achsbolzen können ggfs. gegeneinander versetzt im Gehäuse angeordnet sein.

Damit der Schlitten bzw. die Führungsstangen einwandfrei und leicht über die Kugellager abrollen können, ist eine entsprechende Schmiereinrichtung vorgesehen. Eine erfindungsgemässe Schmiereinrichtung besteht aus Filzplättchen oder Filzstiften, welche mit einem entsprechenden Schmiermittel getränkt sind. Diese Schmierplättchen bzw. Schmierstifte lagern in entsprechenden Halterungen, wobei diese Halterungen an verschiedenen Stellen längs der Führungsstangen vor oder hinter den Kugellagern angeordnet sind. Die Anordnung ist so festgelegt, dass in Gebrauchslage die Führungsstangen unter leichtem Druck über diese Filzplättchen bzw. Filzstifte hinweggleiten und so jeweils Schmiermittel aufnehmen. Auch bei hoher Dauerbelastung und bei hoher Beanspruchung ist eine entsprechende Schmierung der Führungsstangen gewährleistet, ein Trockenlaufen bzw. ein Festgehen der Führungsstangen ist ausgeschlossen. Die Filzplättchen bzw. Filzstifte sind leicht mit Schmiermittel tränkbar oder insgesamt austauschbar.

In das den Schlitten bildende Kastenprofil greift ein Zylinder, insbesondere ein mit Druck beaufschlagbarer Zylinder ein, wobei dieser Zylinder bevorzugt gelenkig mit einem an einer Stirnplatte befestigten Zylinderhalter verbunden ist.

Der Zylinderhalter weist dabei eine etwa gabelförmige Form auf, in welche ein Lagerauge des Zylinders eingreift. Zur Festlegung durchgreift ein Bolzen die Aufnahmegabel sowie das Lagerauge. Neben dieser Art der Lagerung ist auch eine etwa kardanische Lagerung denkbar. Andererseits dieser Lagerung ist eine dem Zylinder zugeordnete Kolbenstange mit einem Mitnehmer verbunden. Der Mitnehmer ist im Innenraum des den Schlitten bildenden Kastenprofils und am Kastenprofil selbst festgelegt. Die Verbindung zwischen Mitnehmer und Kolbenstange entsteht bevorzugt durch eine Kupplung, welche einerseits in eine entsprechende Gewindebohrung im Mitnehmer und andererseits an die Kolbenstange mit entsprechendem Aussengewinde aufgeschraubt und durch eine Kontermutter festgelegt wird. Ein etwa zwischen dem Mitnehmer und der Kolbenstange auftretendes Spiel lässt sich so genauestens ausgleichen. Der Mitnehmer ist ebenfalls lösbar durch entsprechende Befestigungselemente am Kastenprofil festgelegt. Durch diese Art der Befestigung lässt sich der Schlitten oder der Zylinder oder beide leicht und schnell ggfs. auswechseln.

Für die Betätigung der Kolbenstange sind an der Stirnplatte Anschlüsse an eine Druckquelle vorgesehen. Bei Beaufschlagen des Zylinders mit Druckmedium erfolgt eine Übertragung der Bewegung der Kolbenstange auf den Schlitten, so dass dieser aus dem Gehäuse ausfährt bzw. in das Gehäuse einfährt. Durch die Verwendung eines Kastenprofils für den Schlitten und durch die Art der Lagerung des Schlittens im Gehäuse ist eine hohe Stabilität gewährleistet. Das Kastenprofil selbst zeichnet sich durch eine hohe Formstabilität aus.

Durch diese Anordnung ist eine verwindungsfeste Tragfähigkeit mit einer hohen Massgenauigkeit auch bei einem relativ langen Hub gewährleistet. Um verschiedene Hublängen bzw. Endlagen für den Schlitten einstellen zu können, sind in das Kastenprofil seitlich parallel zueinander verlaufende, etwa T-förmige Längsnuten eingeformt. In diese Längsnuten sind mit Hilfe von T-Nutensteinen Anschläge festlegbar. Die Festlegung erfolgt durch entsprechende Befestigungselemente, wie beispielsweise Gewindebolzen od. dgl.. Durch Lösen dieser Befestigungselemente lassen sich die Anschläge längs dieser Längsnuten stufenlos verschieben. Zur endgültigen Festlegung einer Zwischenposition bzw. einer Endlage ist diesen Anschlägen ein Stossdämpfer zugeordnet. Er ist dabei parallel zur Längsnut angeordnet und lagert in einem Stossdämpferhalter. Der Stossdämpferhalter ist mittels eines Gewindebolzens in einer Radialbohrung in einem Kolben festgelegt. Der Kolben verläuft dabei vertikal zur Mittelachse des Stossdämpfers innerhalb einer zylindrischen Bohrung in einer Stufenanschlagplatte. Die Stufenanschlagplatte verschliesst die Öffnung des Gehäuses um den Schlitten herum. Beidseitig des Kolbens sind innerhalb der zylindrischen Bohrung Kammern ausgebildet. Diese Kammern werden jeweils durch Deckel verschlossen, welche durch Lagerbolzen, die auf die Deckel drücken, klemmend festgelegt sind. Dichtungsringe in den Deckeln bzw. um die Kolben sorgen für einen luftdichten Abschluss der Kammern. Selbstverständlich sind für den Verschluss der Kammern auch Schraubverschlüsse od. dgl. vorstellbar, wobei solche Verschlüsse kostenaufwendiger und weniger wartungsfreundlich sind.

In die Kammern beidseits des Kolbens sind Stecknippelverschlüsse eingeschraubt. Diese Stecknippelverschlüsse sind jeweils mit einer das Druckmedium führenden Leitung verbunden, welche durch das Gehäuse geführt und mit Anschlüssen an der Stirnplatte verbunden sind.

Durch Beaufschlagung der Kammern mit Druckmedium wird der Kolben bewegt. Entsprechend dieser Bewegung wird innerhalb einer dafür vorgesehenen Aussparung in der Stufenanschlagplatte der Stossdämpferhalter und mit ihm zwangsläufig der Stossdämpfer in seiner Lage verändert und zwar so, dass er jeweils die Bahnen der Anschläge wechselt.

Fährt beispielsweise der Schlitten aus dem Gehäuse heraus, so trifft ein erster Anschlag auf den in seiner Bahn liegenden Stossdämpfer. Der Schlitten wird so in einer ersten Halteposition gestoppt. Nach einer gewünschten Zeit wechselt der Stossdämpfer nun seine Lageebene und gibt den ersten Anschlag wieder frei. Der Schlitten kann weiter aus dem Gehäuse herausfahren bis der zweite Anschlag auf den Stossdämpfer trifft, der jetzt in seiner Ebene liegt. Die endgültige Endstellung der Hubbewegung ist erreicht.

Gegenüber dem oben beschriebenen Stossdämpfer besitzt der Schlitten einen weiteren Anschlag, der im hinteren Bereich des Gehäuses mit einem in die Stirnplatte eingepassten Stossdämpfer zusammenwirkt. Der Anschlag und dieser Stossdämpfer bestimmen die Endlage bzw. die Ausgangsstellung für den eingefahrenen Schlitten.

Für ein gedämpftes Aufschlagen der Anschläge bzw. für ein gedämpftes Bremsen des Schlittens im Bereich der Halte- bzw. Endstellung sorgen bevorzugt progressiv arbeitende hydraulische Stossdämpfer.

Die Pneumatik, welche sowohl die Hubbewegung als auch die Höhenverstellung bzw. Lageveränderung der Stossdämpfer bewirkt, wird bevorzugt durch induktive Näherungsschalter gesteuert. Im Bereich der Stossdämpfer bzw. im Bereich der Endlagen der Anschläge sind Näherungsschalter vorgesehen, welche die jeweilige End- oder Zwischenposition des Schlittens melden. Die Näherungsschalter werden in Kunststoffhülsen gehalten, welche in entsprechende Bohrungen im Gehäuse einclipsbar sind. Diese Art der Halterung von Näherungsschaltern ermöglicht ihr schnelles und unkompliziertes Auswechseln.

Zur Einstellung bzw. zur Lageveränderung der die Zwischenstellungen und Endlagen bestimmenden Anschläge sind seitlich am Gehäuse Montageöffnungen vorgesehen. Zur Abdeckung der Montageöffnungen in Gebrauchslage sind Führungsschienen angebracht, in welche Abdeckplatten, bevorzugt in Form von Kunststoffstreifen, eingeschoben werden können. In anderen Ausführungsbeispielen können solche Abdeckplatten aber auch angeschraubt oder mittels besonderer Befestigungselemente angesteckt werden.

An der Unterseite des Gehäuses ist eine schwalbenschwanz- bzw. trapezförmige Schiene angeformt. Diese Schiene ist für eine lösbare Festlegung an einer entsprechenden Halterung vorgesehen. Ohne grossen Aufwand kann eine derart ausgestattete Einheit über ihre ganze Länge stufenlos verschoben bzw. eingestellt werden. Zusammen mit den Zwischenanschlägen lässt sich eine so ausgerüstete Lineareinheit optimal einrichten.

Der Haupterfindungsgedanke einer solchen Lineareinheit liegt vor allem in der Verwendung eines Kastenprofils für die Ausbildung des Schlittens. Ein solches Kastenprofil besitzt eine sehr hohe Formstabilität, wodurch eine hohe Genauigkeit gewährleistet ist. Ebenfalls besonders hervorzuheben ist die Anordnung der End- bzw. Zwischenanschläge. Die leichte und schnelle Möglichkeit, Zwischenpositionen stufenlos einfach durch Verschieben der Anschläge in den Nutenbahnen einzustellen, macht die Lineareinheit der oben genannten Art universell einsetzbar.

Weitere Einzelheiten der Erfindung ergeben sich aus der nachfolgenden Beschreibung bevorzugter Ausführungsbeispiele sowie anhand der Zeichnung; diese zeigt in

Figur 1          eine teilweise aufgebrochene Seitenansicht einer erfindungsgemässen Lineareinheit;
Figur 2          einen Längsschnitt durch die Lineareinheit gemäss Figur 1 entlang II-II;
Figur 3          einen vergrösserten Querschnitt durch die Lineareinheit entlang Linie III-III in Figur 1;
Figur 4          einen Ausschnitt eines vergrösserten Querschnittes durch die Lineareinheit entlang Linie IV-IV in Figur 1;
Figur 5          eine Draufsicht auf eine Stirnplatte der Lineareinheit.

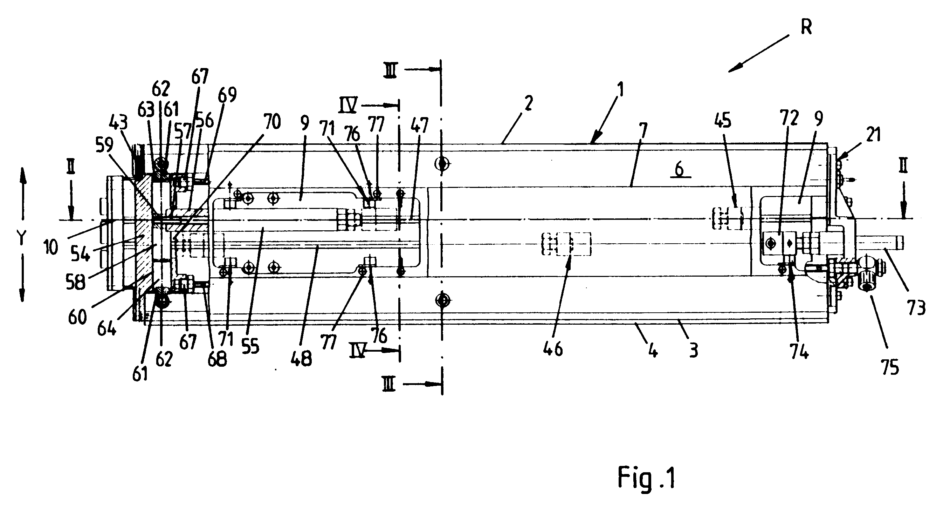

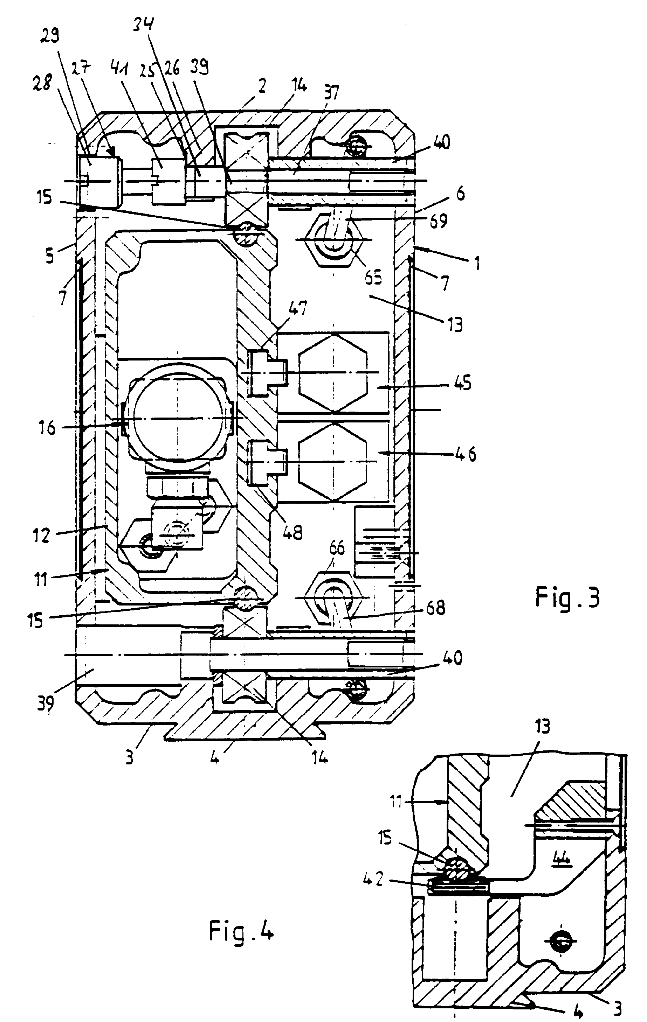

Gemäss Figur 1 besitzt eine Lineareinheit R ein Gehäuse 1, welches, wie vor allem in Figur 3 sichtbar, die Form eines geschlossenen etwa rechteckigen Profils aufweist.

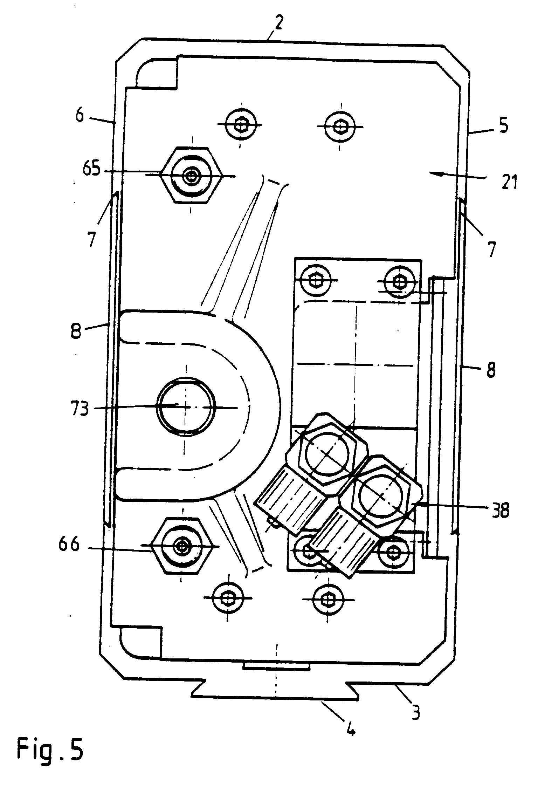

Während das Gehäuse 1 eine ebene Oberseite 2 ausbildet, ist an seiner Unterseite 3 eine querschnittlich schwalbenschwanz- bzw. trapezförmige Schiene 4 angeformt. Seitenflächen 5 und 6 besitzen Führungskanäle 7 für die Aufnahme von Abdeckplatten 8 (siehe Fig. 5). Diese Abdeckplatten 8 sind beispielsweise Kunststoffstreifen, welche für das Verschliessen bzw. Freigeben von Montageöffnungen 9 vorgesehen sind.

In das Gehäuse 1 ist ein Schlitten 11 für die Übertragung einer Linearbewegung eingesetzt. Der Schlitten

4

EP 0 472 778 B1

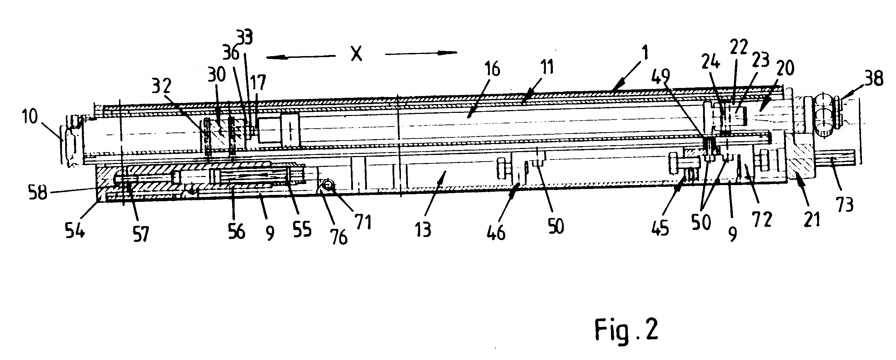

11 besteht aus einem Kastenprofil 12 mit einem etwa rechteckigen Querschnitt. Er ist gemäss Figur 3 linksseitig im Innenraum des Gehäuses 1 rollengelagert verschiebbar angeordnet, so dass rechtsseitig im Gehäuse 1 ein freier Kanal 13 ausgebildet wird. Der Schlitten 11 ragt auf einer Seite aus dem Gehäuse 1 heraus und ist stirnseitig auf dieser Seite mit einer Trägerplatte 10 für die Aufnahme einer weiteren Lineareinheit, eines Greifers, einer Zange, einer Dreheinheit od. dgl., bestückt. Wie besonders in Figur 2 sichtbar, ist der Schlitten 11 dabei von einem Zylinder 16 durchdrungen, in welchem eine Kolbenstange 17 durch einen nicht näher dargestellten Kolben, der mit Druckmedium, insbesondere Druckluft, beaufschlagt wird, in Bewegung versetzbar ist.

Der Zylinder 16 lagert einerseits in einem Zylinderhalter 20, welcher an einer Stirnplatte 21 festgelegt ist. Der Zylinderhalter 20 ragt dabei mit einer Aufnahmegabel 22 stirnseitig in den Schlitten 11 ein, wobei ein Lagerauge 23 am Zylinder 16 in diese Aufnahmegabel 22 eingreift. Zur endgültigen Festlegung durchgreift ein Bolzen 24 das Lagerauge 23 in der Aufnahmegabel 22.

Anderseitig ist die Kolbenstange 17 mit einem Mitnehmer 30 verbunden, der durch zumindest eine, bevorzugt jedoch durch zwei Senkkopfschrauben 32 mit dem Schlitten 11 verschraubt ist. Die Kolbenstange 17 greift mit einem Gewindestift 33 in den Mitnehmer 30 und wird durch eine Kontermutter 36 festgelegt.

Für die Betätigung der Kolbenstange 17 sind an der Stirnplatte 21 Anschlüsse 38 an eine Druckquelle vorgesehen. Bei Beaufschlagung des Zylinders 16 mit Druckmedium erfolgt eine Übertragung der Bewegung der Kolbenstange 17 auf den Schlitten 11, so dass dieser in Richtung x aus dem Gehäuse 1 ausfährt. Dabei gleitet der Schlitten 11 zwischen Kugellagern 14. Diese laufen im oder am Kastenprofil 12 angebrachte, vorzugsweise gehärtete und geschliffene Führungsstangen 15 ab. Diese Kugellager 14 sitzen oberhalb und unterhalb des Schlittens 11 etwa mittig im Gehäuse 1 auf je einem Achsbolzen 39, welcher nach dem Kugellager 14 mit einem Gewindeabschnitt 37 in eine hülsenförmige Spannmutter 40 eingreift. Andernends des Gewindeabschnitts 37 ist dem Achsbolzen 39 nach einem Bolzenabschnitt 34 ein Schlitzkopf 41 angeformt, der mit einer Schulter 25 an einen Steg 26 des Gehäuses 1 anschlägt. Der entsprechende Anschlagbereich des Steges 26 ist plan gefräst und zwar über seine gesamt Länge, so dass eine exakte Justierung der aufeinanderfolgenden Kugellager 14 erfolgen kann.

In den Kopf 41 dringt ein weiterer Schraubenbolzen 27 als Abstützung ein, wobei dessen Kopf 28 in einer Gehäusebohrung 29 satt sitzt.

Der Achsbolzen 39 ist im übrigen geringfügig exzentrisch an den Bolzenabschnitt 34 angeformt, so dass bei einer Drehung ein Spiel zwischen Kugellager 14 und Führungsstange 15 minimiert werden kann.

Für die Gewährleistung der Leichtgängigkeit des Schlittens 11, insbesondere des Gleitens der Führungsstangen 15 an den Kugellagern 14, sind im Gehäuse 1 mit einem entsprechenden Schmiermedium tränkbare Filzplättchen 42 bzw. Filzstifte 43 vorgesehen. Wie insbesondere in Figur 4 erkennbar, sind die Filzplättchen 42 zwischen den Kugellagern 14 mit Hilfe von entsprechenden Plättchenhaltern 44 so angeordnet, dass in Gebrauchslage die Führungsstangen 15 unter mässigem Druck über sie hinweggleiten und Schmiermedium aus den Filzplättchen 42 bzw. Filzstiften 43 aufnehmen.

Die Verwendung eines Kastenprofils 12 für den Schlitten 11 einerseits und die Art der Lagerung des Schlittens 11 andererseits sorgen für eine hohe verwindungsfeste Tragfähigkeit des Schlittens 11 auch bei relativ langem Hub. Eine entsprechend auftretende Beanspruchung von aussen wird insbesondere von den Kugellagern 14 über die Führungsstangen 15 aufgenommen. Eine hohe Formstabilität ist so erreicht.

Um verschiedene Hublängen bzw. Endlagen für den Schlitten 11 einzustellen, verfügt die Lineareinheit R über entsprechende Anschläge 45 bzw. 46. Zu deren Einstellung sind dem Kastenprofil 12 seitlich zum Kanal 13 hin parallel zueinander verlaufend zwei T-förmige Längsnuten 47 und 48 eingeformt.

Mit Hilfe von T-Nutensteinen 49 und entsprechenden Befestigungselementen 50, wie beispielsweise Gewindebolzen od. dgl., lassen sich die Anschläge 45 bzw. 46 festlegen und lösen und sind so längs dieser Längsnuten 47 bzw. 48 stufenlos verschiebbar.

Zur endgültigen Festlegung einer Endlage oder einer Zwischenlage ist den Anschlägen 45 bzw. 46 einerseits ein Stossdämpfer 55 zugeordnet. Der Stossdämpfer 55 ist parallel zur Längsnut 47 bzw. 48 angeordnet und lagert dabei in einem Stossdämpferhalter 56. Der Stossdämpferhalter 56 ist mittels eines Gewindebolzens 57 od. dgl. in einer Radialbohrung 59 in einem Kolben 58 festgelegt. Der Kolben 58 verläuft vertikal zur Mittelachse des Stossdämpfers 55 innerhalb einer zylindrischen Bohrung 60 in einer Stufenanschlagplatte 54.

Beidseitig des Kolbens 58 ist die zylindrische Bohrung 60 durch Deckel 61 verschlossen, welche durch Lagerbolzen 62 klemmend festgelegt sind, wobei diese auf die Deckel 61 drücken. Zwischen Kolben 58 und den Deckeln 61 ist je eine mit einem Druckmedium, insbesondere mit Druckluft, beaufschlagbare Kammer 63 bzw. 64 ausgebildet. Über Stecknippelverschraubungen 67 sind die Kammern 63 und 64 mit das Druckmedium führenden Leitungen 68 und 69 verbunden. Diese besitzen Anschlüsse 65 und 66 an der Stirnplatte 21(siehe Fig. 3).

Durch Beaufschlagung der Kammer 63 bzw. 64 mit Druckmedium wird der Kolben 58 in Richtung y bewegt. Entsprechend dieser Bewegung wird innerhalb einer dafür vorgesehenen Aussparung 70 in der Stufenan-

5

schlagplatte 54 bzw. in der zylindrischen Bohrung 60 der Stossdämpferhalter 56 und mit ihm zwangsläufig der Stossdämpfer 55 in seiner Lage verändert und zwar so, dass er zum einen in der Ebene der T-förmigen Längsnut 47 bzw. des Anschlages 45 und zum anderen in der Ebene der T-förmigen Längsnut 48 bzw. des Anschlages 46 zu liegen kommt.

Durch entsprechendes Anordnen der Anschläge 45 und 46 längs der T-förmigen Längsnut 47 bzw. 48 einerseits und durch Verändern der Lage des Stossdämpfers 55 andererseits lassen sich gewünschte Hubbewegungen erzielen bzw. End- oder Zwischenlagen des Schlittens 11 einstellen.

Für ein Erkennen einer End- oder Zwischenlage der Anschläge 45 und 46 sorgen induktive Näherungsschalter 71. Diese Näherungsschalter 71 registrieren den jeweils ankommenden Anschlag 45 bzw. 46. Die Näherungsschalter 71 sitzen in Kunststoffträgern 76 und sind in Löchern 77 in dem Gehäuse 1 eingeclipst. Sie sind von aussen her zugänglich und leicht auswechselbar.

Zur Stirnplatte 21 hin ist dem Schlitten 11 ein Endanschlag 72 zugeordnet, welcher mit einem Stossdämpfer 73 zusammenwirkt. Auch diesem Endanschlag 72 ist ein induktiver Näherungsschalter 74 der oben genannten Art zugeordnet.

Durch die oben beschriebene schwalbenschwanz- bzw. trapezförmige Schiene 4 über die gesamte Länge der Unterseite 3 des Gehäuses 1 ist diese Lineareinheit R über die ganze Länge auf einer entsprechenden Halteeinrichtung verschiebbar und klemmend festlegbar.

| | POSITIONSZAHLENLISTE | | | | |
|---|---|---|---|---|---|
| 1 | Gehäuse | 34 | Bolzenabschnitt | 67 | Stecknippelverschr. |
| 2 | Oberseite | 35 | | 68 | Leitung |
| 3 | Unterseite | 36 | Kontermutter | 69 | Leitung |
| 4 | Schiene | 37 | Gewindeabschnitt | 70 | Aussparung |
| 5 | Seitenfläche | 38 | Anschlüsse | 71 | Näherungsschalter |
| 6 | Seitenfläche | 39 | Achsbolzen | 72 | Endanschlag |
| 7 | Führungskanal | 40 | Spannmutter | 73 | Stossdämpfer |
| 8 | Abdeckplatte | 41 | Schlitzkopf | 74 | Näherungsschalter |
| 9 | Montageöffnung | 42 | Filzplättchen | 75 | |
| 10 | Trägerplatte | 43 | Filzstift | 76 | Kunststoffträger |
| 11 | Schlitten | 44 | Plättchenhalter | 77 | Loch |
| 12 | Kastenprofil | 45 | Anschlag | | |
| 13 | Kanal | 46 | Anschlag | | |
| 14 | Kugellager | 47 | Längsnut | R | Lineareinheit |
| 15 | Führungsstangen | 48 | Längsnut | x | Richtung |
| 16 | Zylinder | 49 | Nutenstein | y | Richtung |
| 17 | Kolbenstange | 50 | Befestigungselement | | |
| 18 | | 51 | | | |
| 19 | | 52 | | | |
| 20 | Zylinderhalter | 53 | | | |
| 21 | Stirnplatte | 54 | Stufenanschlagplatte | | |
| 22 | Aufnahmegabel | 55 | Stossdämpfer | | |
| 23 | Lagerauge | 56 | Stossdämpferhalter | | |
| 24 | Bolzen | 57 | Gewindebolzen | | |
| 25 | Schulter | 58 | Kolben | | |
| 26 | Steg | 59 | Radialbohrung | | |
| 27 | Schraubenbolzen | 60 | zyl. Bohrung | | |
| 28 | Kopf | 61 | Deckel | | |
| 29 | Gehäusebohrung | 62 | Lagerbolzen | | |
| 30 | Mitnehmer | 63 | Kammer | | |
| 31 | | 64 | Kammer | | |
| 32 | Senkkopfschraube | 65 | Anschlüsse | | |
| 33 | Gewindestift | 66 | Anschlüsse | | |

## Patentansprüche

1. Lineareinheit, insbesondere Vorrichtung zum Bearbeiten, Transportieren und Manipulieren von Werkstücken, mit einem Gehäuse (1) und einem aus dem Gehäuse (1) bewegbaren und als Kastenprofil ausgebildeten, mit Führungsstangen (15) versehenen Schlitten (11), an welchem ein Handlinggerät od. dgl. für das Werkstück festlegbar ist, wobei im Gehäuse (1) sich ggfs. versetzt gegenüberliegend verstellbare Lager (14) angeordnet sind, zwischen denen der Schlitten (11) gleitbar lagert,
dadurch gekennzeichnet,
dass die Führungsstangen (15) querschnittlich rund ausgebildet und die als Kugellager ausgebildeten Lager (14) der Form der Führungsstangen teilweise entsprechend nachgebildet sind, wobei zumindest eines der sich gegenüberliegenden Kugellager (14) auf einem Achsbolzen (39) sitzt, der einerseits mit einem Gewindeabschnitt (37) in eine hülsenförmige Spannmutter (40) eingreift und andererseits sich über einen Bolzenabschnitt (34) gegen einen Schraubenbolzen (27) abstützt, wobei Achsbolzen (39), Gewindeabschnitt (37), Bolzenabschnitt (34) und Schaubenbolzen (27) mit ihren Achsen senkrecht zur Führungsstange angeordnet sind und die Achse des Achsbolzens (39) achsparallel zur Achse des benachbarten Bolzenabschnittes (34) und des Gewindeabschnittes (37) verläuft.

2. Lineareinheit nach Anspruch 1, dadurch gekennzeichnet, dass der Bolzenabschnitt (34) mit einem Schlitzkopf (41) verbunden ist, in den der abstützende Schraubenbolzen (27) eindringt.

3. Lineareinheit nach Anspruch 2, dadurch gekennzeichnet, dass der Schlitzkopf (41) an einem Steg (26) des Gehäuses (1) anschlägt.

4. Lineareinheit nach einem der Ansprüche 1 bis 3, dadurch gekennzeichnet, dass den Führungsstangen (15) Schmiereinrichtungen (42, 43) zugeordnet sind.

5. Lineareinheit nach wenigstens einem der Ansprüche 1 bis 4, dadurch gekennzeichnet, dass in den Schlitten (11) zumindest eine Nut (47, 48) zur Festlegung von zumindest einem Anschlag (45, 46, 72) eingeformt ist.

6. Lineareinheit nach Anspruch 5, dadurch gekennzeichnet, dass dem Anschlag (45, 46, 72) zumindest einseitig als Endanschlag ein Stossdämpfer (55, 73) zugeordnet ist.

7. Lineareinheit nach Anspruch 6, dadurch gekennzeichnet, dass der Stossdämpfer (55) aus der Bahn des Anschlages (45, 46, 72) entfernbar ist.

8. Lineareinheit nach Anspruch 7, dadurch gekennzeichnet, dass senkrecht zur Bahn des Anschlages (45, 46, 72) ein Kolben (58) in einer zylindrischen Bohrung (60) gleitet, wobei der Kolben (58) den Stossdämpfer (55) in einer Aussparung (70) hält bzw. in dieser führt.

9. Lineareinheit nach Anspruch 8, dadurch gekennzeichnet, dass beidseits des Kolbens (58) in der zylindrischen Bohrung (60) eine Kammer (63, 64) gebildet und von Druckmedium beaufschlagbar ist.

10. Lineareinheit nach Anspruch 9, dadurch gekennzeichnet, dass die Kammern (63, 64) andererseits des Kolbens (58) durch Deckel (61) verschlossen sind, wobei die Verschliessung durch die Spannmutter (40), welche auf die Deckel (61) drücken, erfolgt, so dass diese klemmend festgelegt sind.

11. Lineareinheit nach einem der Ansprüche 5 bis 10, dadurch gekennzeichnet, dass dem Anschlag (45, 46, 72) zumindest ein Näherungsschalter (71, 74) zum Feststellen einer Endlage zugeordnet ist, wobei der Näherungsschalter (71, 74) in einem Kunststoffträger (76) lagert, welcher in ein Gehäuseloch (77) einclipsbar ist.

12. Lineareinheit nach wenigstens einem der Ansprüche 1 bis 11, dadurch gekennzeichnet, dass das Gehäuse (1) Montageöffnungen (9) aufweist, welche von Abdeckplatten (8) in Gebrauchslage überdeckt sind.

13. Lineareinheit nach wenigstens einem der Ansprüche 1 bis 12, dadurch gekennzeichnet, dass das Gehäuse (1) eine schwalbenschwanz- bzw. trapezförmige Schiene (4) zum lösbaren Festlegen an einer Halterung aufweist.

**Claims**

1. Linear unit, in particular an apparatus for the machining, transportation and manipulation of workpieces, with a housing (1) and a carriage (11) which is movable from the housing (1), is designed as a box profile, is provided with guide rods (15) and on which a handling device or the like for the workpiece may be fixed, wherein adjustable bearings (14) between which the carriage (11) is slidably mounted are arranged opposite one another, optionally in an offset manner, in the housing (1), characterised in that the guide rods (15) are designed so as to be round in cross section and the bearings (14) designed as ball bearings are designed in part to correspond to the shape of the guide rods, wherein at least one of the mutually opposed ball bearings (14) rests on an axle bolt (39) which, on the one hand, engages with a threaded portion (37) in a sleeve-shaped clamping nut (40) and, on the other hand, rests via a bolt portion (34) against a screw bolt (27), axle bolt (39), threaded portion (37), bolt portion (34) and screw bolt (27) being arranged with their axes perpendicularly to the guide rod and the axle of the axle bolt (39) extending with its axis parallel to the axis of the adjacent bolt portion (34) and of the threaded portion (37).

2. Linear unit according to claim 1, characterised in that the bolt portion (34) is connected to a slotted head (41) into which the supporting threaded bolt (27) penetrates.

3. Linear unit according to claim 2, characterised in that the slotted head (41) strikes a web (26) of the housing (1).

4. Linear unit according to one of claims 1 to 3, characterised in that the guide rods (15) are allocated lubricating arrangements (42, 43).

5. Linear unit according to at least one of claims 1 to 4, characterised in that at least one groove (47, 48) for fixing at least one stop (45, 46, 72) is shaped into the carriage (11).

6. Linear unit according to claim 5, characterised in that the stop (45, 46, 72) is allocated a shock absorber (55, 73) as an end stop at least on one side.

7. Linear unit according to claim 6, characterised in that the shock absorber (55) may be removed from the path of the stop (45, 46, 72).

8. Linear unit according to claim 7, characterised in that, perpendicularly to the path of the stop (45, 46, 72), a piston (58) slides in a cylindrical bore (60), the piston (58) holding or guiding the shock absorber (55) in a recess (70).

9. Linear unit according to claim 8, characterised in that a chamber (63, 64) is formed on both sides of the piston (58) in the cylindrical bore (60) and may be loaded by a pressure medium.

10. Linear unit according to claim 9, characterised in that the chambers (63, 64) are closed by covers (61) on the other side of the piston (58), closure taking place by means of the clamping nuts (40) which press on the covers (61) so that the covers (61) are fixed in a clamping manner.

11. Linear unit according to one of claims 5 to 10, characterised in that the stop (45, 46, 72) is allocated at least one proximity switch (71, 74) for detecting an end position, the proximity switch (71, 74) being mounted in a plastic carrier (76) which can be snapped into a housing hole (77).

12. Linear unit according to at least one of claims 1 to 11, characterised in that the housing (1) has assembly orifices (9) which are covered in the position of use by cover plates (8).

13. Linear unit according to at least one of claims 1 to 12, characterised in that the housing (1) has a dovetail-shaped or trapezoidal rail (4) for releasable fixing to a mounting.

**Revendications**

1. Unité de translation rectiligne et notamment dispositif pour l'usinage, le transport et manipulation de pièces d'oeuvre, avec un carter (1) et un chariot (11) en forme de boîte, muni de tiges de guidage (15) et susceptible d'être déplacé hors du carter (1), chariot sur lequel on peut fixer un appareil de maniement ou un appareil analogue pour la pièce d'oeuvre, tandis que dans le carter (1) sont disposés des paliers (14) réglables, placés l'un en face de l'autre en étant éventuellement décalés, et entre lesquels le chariot (11) est monté de façon à pouvoir glisser, unité de translation caractérisée en ce que les tiges de guidage (15) sont rondes en section transversale et les paliers (14), réalisés sous la forme de paliers à billes, s'adaptent partiellement à la forme arrondie des tiges de guidage, tandis que l'un au moins des paliers à billes (14) se trouvant l'un en face de l'autre, est placé sur un axe (39) qui vient d'une part en prise, par une partie filetée (37), avec un écrou tendeur (40) en forme de douille, et qui prend appui d'autre part, par l'intermédiaire d'un tronçon de goujon (34), contre un boulon (27), l'axe (39), la partie filetée (37), le tronçon de goujon (34) et le boulon (27) étant placés dans un alignement perpendiculaire à la tige de guidage.

2. Unité de translation rectiligne selon la revendication 1, caractérisée en ce que le tronçon de goujon (34) est muni d'une tête à fente (41) dans laquelle pénètre le boulon d'appui (27).

3. Unité de translation rectiligne selon la revendication 2, caractérisée en ce que la tête à fente (41) vient en butée contre une nervure (26) du carter (1).

4. Unité de translation rectiligne selon l'une des revendications 1 à 3, caractérisée en ce que des dispositifs de lubrification (42, 43) sont associés aux tiges de guidage (15).

5. Unité de translation rectiligne selon l'une au moins des revendications 1 à 4, caractérisée en ce qu'au moins une gorge (47, 48) est prévue dans les chariots (11) pour la fixation d'au moins une butée (45, 46, 72).

6. Unité de translation rectiligne selon la revendication 5, caractérisée en ce qu'à la butée (45, 46, 72) est associé au moins d'un côté, en tant que butée terminale, un amortisseur de chocs (55, 73).

7. Unité de translation rectiligne selon la revendication 6, caractérisée en ce que l'amortisseur de chocs (55) peut être enlevé de la trajectoire de la butée (45, 46, 72).

8. Unité de translation rectiligne selon la revendication 7, caractérisée en ce que, perpendiculairement à la trajectoire de la butée (45, 46, 72), un piston (58) glisse dans un alésage cylindrique (60), ce piston (58) maintenant l'amortisseur de chocs (55) dans un évidement (70) ou bien le guidant dans celui-ci.

9. Unité de translation rectiligne selon la revendication 8, caractérisée en ce que, des deux côtés du piston (58), une chambre (63, 64) est ménagée dans l'alésage cylindrique (60) et peut être alimentée en fluide sous pression.

10. Unité de translation rectiligne selon la revendication 9, caractérisée en ce que les chambres (63, 64) sont fermées sur leur côté opposé au piston (58) par des couvercles (61), cette fermeture s'effectuant par l'intermédiaire des écrous tendeurs (40) qui pressent sur les couvercles (61), si bien que ceux-ci sont fixés par pincement.

11. Unité de translation rectiligne selon l'une des revendications 5 à 10, caractérisée en ce qu'à la butée (45, 46, 72) est associé au moins un détecteur de proximité (71, 74) pour déterminer une position terminale, ce détecteur (71, 74) étant monté sur un support en matière plastique clipsable dans un trou (77) du carter.

12. Unité de translation rectiligne selon l'une au moins des revendications 1 à 11, caractérisée en ce que le carter (1) comporte des ouvertures de montage (9) qui sont recouvertes par des plaques (8) lorsque le dispositif est utilisé.

13. Unité de translation rectiligne selon l'une au moins des revendications 1 à 12, caractérisée en ce que le carter (1) comporte un rail (4) en forme de queue d'aronde ou de trapèze pour sa fixation amovible sur un support.

Fig.1

Fig. 2

Fig.3

Fig.4

Fig. 5